# EUROPÄISCHE PATENTSCHRIFT

(11) **EP 0 814 170 B1**
(45) Veröffentlichungstag und Bekanntmachung des Hinweises auf die Patenterteilung: **28.02.2001**
(21) Anmeldenummer: 97107503.1
(22) Anmeldetag: 07.05.1997
(51) Int. Cl.: C22C 9/05, G02C 5/00

(54) **Legierung auf Kupferbasis, insbesondere zur Herstellung von Brillengestellen, Schmuck etc.**
Copper base alloy, more particularly for the manufacture of spectacle frames, ornaments etc.
Alliage à base de cuivre, en particulier pour la fabrication de montures de lunettes, ornements etc.

(30) Priorität: 21.06.1996 DE 19624731
(43) Veröffentlichungstag der Anmeldung: 29.12.1997
(73) Patentinhaber: Berkenhoff GmbH, 35452 Heuchelheim (DE)
(72) Erfinder: Fackert, Jürgen, 35259 Steffenberg (DE); Tauber, Klaus, 35444 Biebertal (DE); Rechtziegel, Bruno, 35452 Heuchelheim (DE)
(74) Vertreter: Missling, Arne, Dipl.-Ing.

(56) Entgegenhaltungen:
- EP-A- 0 545 231
- DE-A- 1 533 437
- SU-A- 223 354

## Beschreibung

Die Erfindung bezieht sich auf eine Legierung, welche insbesondere zur Herstellung von Brillengestellen, jedoch auch für Schmuckwaren und andere am Körper zu tragenden bzw. an Kleidungsstücken angebrachten, körperberührenden Metallteilen verwendet wird. Weiterhin betrifft die Erfindung Brillengestelle und auch Schmuckstücke, Metallteile für Kleidungsstücke, welche unter Verwendung der Legierung hergestellt werden, sowie Zwischenprodukte und Vormaterialien, beispielsweise Brillendraht, zur Herstellung der Brillengestelle und Schmuckwaren oder deren Teile unter Verwendung der Legierung.

Bei der Herstellung von Brillengestellen, Schmuckwaren, am Körper zu tragenden Metallteilen oder ähnlichem müssen unterschiedliche Kriterien erfüllt sein, um das Produkt in der Praxis einsetzen zu können. Zum einen müssen die hergestellten Erzeugnisse eine ausreichende Festigkeit aufweisen, zum anderen ist den optischen Anforderungen Genüge zu leisten. Die Probleme der Festigkeit stellen sich insbesondere bei Brillengestellen, und da vor allem bei den Einfassungen der Gläser, den Scharnieren oder den Bügeln.

Die Problematik insbesondere bei Brillengestellen besteht darin, daß diese ein- oder mehrfach gelötet werden müssen, um z.B. die Scharniere oder Mittelstege zu befestigen. Durch die Erwärmung erweicht das Metall, so daß die Legierungen eine hohe Wärmefestigkeit aufweisen müssen, damit die Brillengestelle federelastisch bleiben.

Auch für sonstige Schmuckwaren, beispielsweise Broschen, Ringe, Ohrringe, Ketten, Bänder oder ähnliches ist es unumgänglich, daß die Legierung auch nach einer Wärmeeinwirkung vorgegebene Festigkeitswerte aufweist, um mechanische Beschädigungen bei der Nutzung zu vermeiden. Weiterhin müssen für bestimmte Anwendungszwecke zusätzliche physikalische Eigenschaften erfüllt sein, beispielsweise hinsichtlich der Wärmeleitfähigkeit, des Längenausdehnungskoeffizienten, des elektrischen Widerstandes und der elektrischen Leitfähigkeit. Ein weiteres Kriterium für die Auswahl einer derartigen Legierung ist deren Herstellbarkeit. Die Legierung soll sowohl einfach gießbar sein, um die erforderlichen Rohlinge beispielsweise durch Stranggießen oder Gießen in Formen herzustellen, als auch umformbar sein, um aus der Legierung beispielsweise Stangen, Drähte, Bänder oder ähnliches erzeugen zu können. Legierungen, welche die oben genannten Anforderungen teilweise oder vollständig erfüllen, sind beispielsweise in dem Gebrauchsmuster 90 17 408.9 oder der DE-OS 38 34 186 beschrieben. Auch die DE-PS 26 26 251 beschreibt eine derartige Legierung. Beispielsweise hat sich Monel für die oben genannten Anwendungszwecke sehr gut bewährt. Monel hat jedoch Nickel-Gehalte von ca. 60 % bis 70 %.

Die genannten Legierungen zeichnen sich insgesamt dadurch aus, daß sie einen relativ hohen Nickelanteil enthalten. Dieser Nickelanteil ist bei Schmuckstücken, Brillengestellen und ähnlichen Artikeln, welche auf der blanken Haut getragen werden, in zunehmendem Maße unerwünscht, da eine Vielzahl von Menschen eine Nickelallergie haben. Unter anderem bedingt durch die zunehmende Umweltbelastung erhöht sich der Prozentsatz der Bevölkerung, welche von derartigen Allergien betroffen ist, zunehmend, so daß nickelenthaltende Legierungen bei den Kunden verstärkt auf Ablehnung stoßen. In einigen Fällen kann durch Beschichtungen oder Umhüllungen Abhilfe geschaffen werden, bei den meisten Anwendungsfällen ist dies jedoch nicht möglich. Des weiteren werden diese Beschichtungen oder Umhüllungen mit zunehmendem Einsatz oder Körperkontakt abgenutzt und/oder verschleißen zumindest lokal.

Aus der DE-Offenlegungsschrift 41 31 426 A1 ist bereits eine Legierung für die genannten Zwecke bekannt, die ohne Beigabe von Nickel auskommt und dabei sehr gute mechanische Festigkeiten und gute Korrosiosbeständigkeit aufweist und in üblicher Weise verarbeitbar ist. Eine solche Legierung ist somit insbesondere für Schmuckstücke und bedingt auch für Brillengestelle oder ähnliches verwendbar, ohne daß bei den Trägern oder Benutzern Nickelallergien auftreten können. Es erübrigen sich bei den fertigen Produkten zusätzliche Schutzmaßnahmen wie beispielsweise Beschichtungen, Lackierungen oder ähnliches, mit denen bei nickelhaltigen Legierungen ein direkter Kontakt mit der Haut vermieden werden soll. Diese Legierung ermöglicht somit eine einfache, kostengünstige Herstellung der entsprechenden Produkte; andererseits eignet sie sich auch für nicht nickelhaltige Beschichtungen, z. B. zu Dekorationszwecken, und zeichnet sich durch eine gute Kaltumformbarkeit und gute Federeigenschaften aus. Auch ihre Verarbeitbarkeit ist gut. Beim Hartlöten oder Schweißen tritt jedoch ein Festigkeitsabfall ein, so daß der Einsatz für Brillengestelle nur bedingt möglich ist.

EP-A-545 231 offenbart eine Kupfer-Mangan-Zink Legierung zur Herstellung von Brillenteilen, die allerdings bis zu 5 Gew.% Al und bis zu 5 Gew.% Fe enthalten kann.

Die Erfindung hat sich die Aufgabe gestellt, eine Legierung vorzuschlagen, die bei weiterhin kostengünstiger Herstellbarkeit, einfacher Verarbeitbarkeit und Verzicht auf die Verwendung von Nickel eine der Monellegierung vergleichbare oder sogar bessere Wärmefestigkeit aufweist.

Die Aufgabe wird erfindungsgemäß durch eine die Merkmale des Anspruches 1 aufweisende Legierung gelöst.

Eine solche erfindungsgemäße Legierung zeichnet sich als nickelfreie Legierung durch eine um bis zu 150°C höhere Erweichungstemperatur gegenüber den bisher bekannten nickelfreien Legierungen aus, so daß bei ihrer thermischen Verarbeitung auch relativ hohe Temperaturen nicht zu einer unerwünschten Erweichung führen. Andererseits ist die Wärmeleitfähigkeit der erfindungsgemäßen Legierung sehr gering, so daß sie beispielsweise zum Löten sehr gut geeignet ist, weil dafür nur eine geringe Wärmemenge erforderlich ist und andere Lötstellen oder andere wärmeempfindliche Bereiche dabei nicht betroffen werden. Diese Verbesserungen des thermischen Verhaltens werden durch die erfindungsgemäße Legierung erreicht, ohne daß der hohe mechanische Standard der vorbekannten Legierungen hätte aufgegeben werden müssen; beispielsweise gewährleisten die Federeigenschaften ihren Einsatz auch bei den Bügeln und Augenrändern von Brillengestellen. Vorteilhaft kann diese Legierung auch für Münzen eingesetzt werden, zumal neben einem geringen Verschleiß Nickelfreiheit gegeben ist. Hinzu kommen gute Verarbeitungseigenschaften.

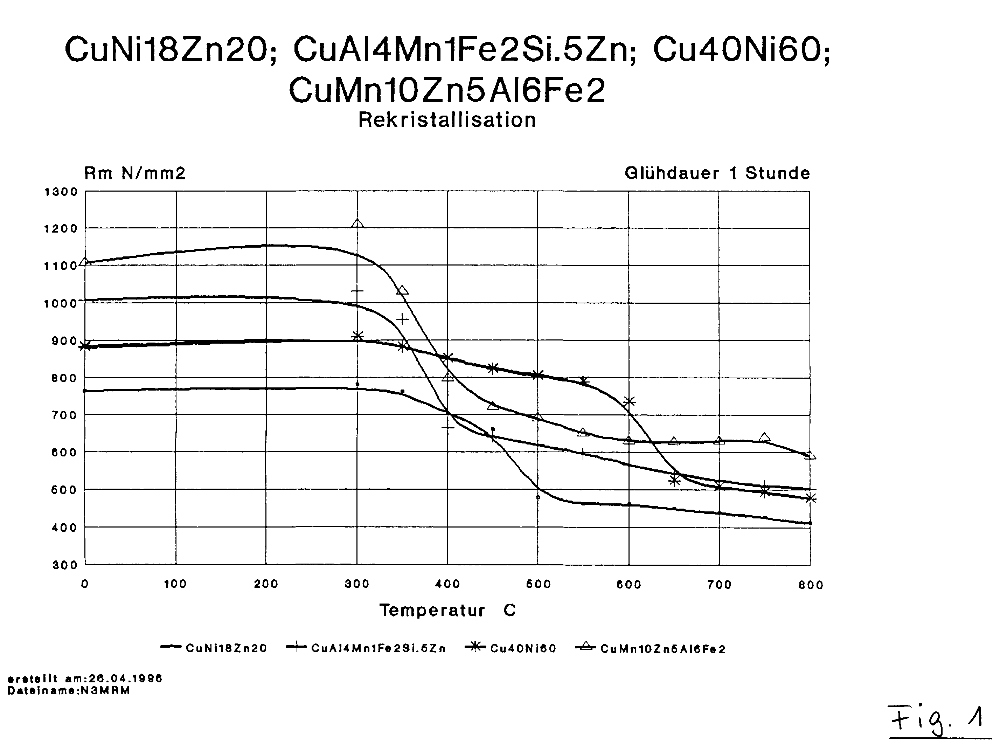

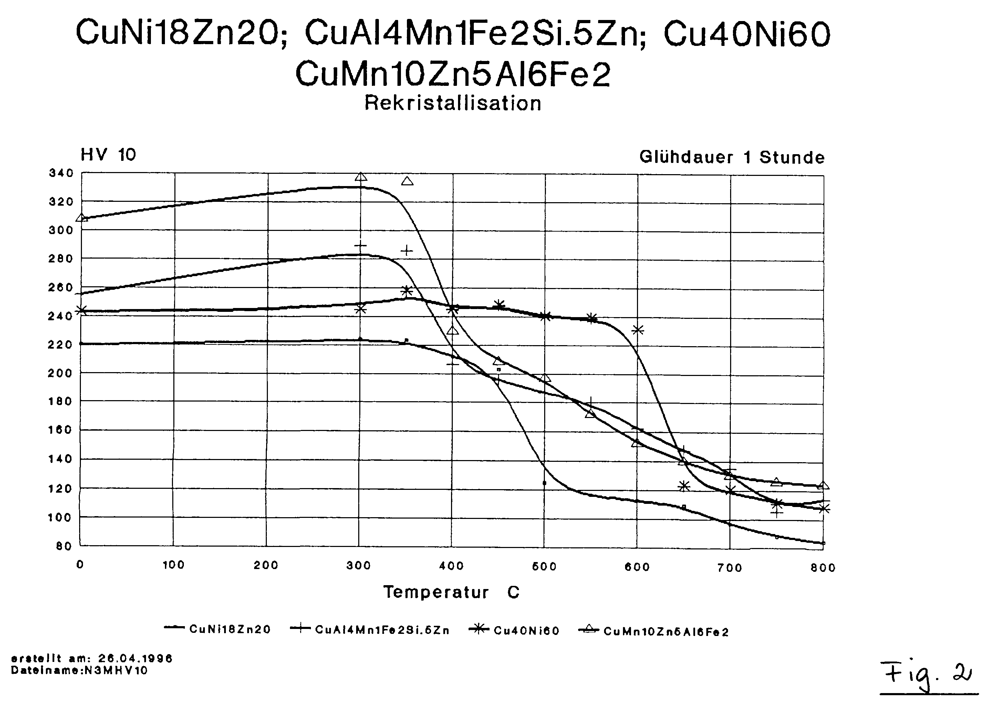

In den beigefügten Zeichnungen (Fig. 1 und Fig. 2) sind die Zugfestigkeitswerte wie auch die Härtewerte der bekannten nickelhaltigen Legierungen in Abhängigkeit der Temperatur dargestellt, wobei diese Werte in etwa parallel verlaufen. Die Legierung CuNi18Zn20 weist bereits bei Raumtemperatur eine relativ niedrige Festigkeit auf, die bei Wärmeeinwirkung zudem noch stark abfällt. Monel (Cu40Ni60) hat eine relativ hohe Ausgangsfestigkeit, die oberhalb von Temperaturen von 300°C erst langsam und dann schneller abnimmt. Die erfindungsgemäße Legierung (CuMnl0Zn5A16Fe2) hat eine noch höhere Kaltfestigkeit, wobei der Festigkeitsabfall mit steigenden Temperaturen zwar zunächst etwas stärker als bei Monel ist, jedoch im Endeffekt die Festigkeit höher als bei Monel ist. Die erfindungsgemäße Legierung bietet somit einen vollwertigen Ersatz für Monel, ohne deren nachteiliges Nickel aufzuweisen.

## Patentansprüche

1. Legierung, insbesondere zur Herstellung von Brillengestellen, Schmuckwaren und anderen am Körper zu tragenden körperberührenden Metallteilen, gekennzeichnet durch folgende Zusammensetzung in Gewichtsprozent:
| | |
|---|---|
| Zn | 3,0 - 7,0 % |
| Mn | 8,0 - 13,0 % |
| Fe | 0,5 - 3,5 % |
| Al | 4,5 - 8,0 % |
| Cu | Rest. |

2. Legierung nach Anspruch 1, gekennzeichnet durch folgende Zusammensetzung in Gewichtsprozent:
| | |
|---|---|
| Zn | 4,5 - 5,5 % |
| Mn | 10,0 - 11,0 % |
| Fe | 1,8 - 2,3 % |
| Al | 6,0 - 6,5 % |
| Cu | Rest |

3. Schmuckwaren, hergestellt unter Verwendung einer Legierung nach einem der Ansprüche 1 oder 2.

4. Brillengestell oder dessen Teile, hergestellt unter Verwendung einer Legierung nach einem der Ansprüche 1 oder 2.

5. Metallteile für Kleidungsstücke, hergestellt unter Verwendung einer Legierung nach einem der Ansprüche 1 oder 2.

6. Zwischenprodukt oder Vormaterial, insbesondere Draht-, Band- oder Stangenmaterial, hergestellt unter Verwendung einer Legierung nach einem der Ansprüche 1 oder 2.

## Claims

1. An alloy, in particular for the production of spectacle frames, jewellery and other metal items to be worn on the body and in contact with the body, characterised by the following composition in per cent by weight:
| | |
|---|---|
| Zn | 3.0 - 7.0% |
| Mn | 8.0 - 13.0 % |
| Fe | 0.5 - 3.5 % |
| Al | 4.5 - 8.0 % |
| Cu | remainder |

2. An alloy according to claim 1, characterised by the following composition in per cent by weight:
| | |
|---|---|
| Zn | 4.5 - 5.5% |
| Mn | 10.0 - 11.0 % |
| Fe | 1.8 - 2.3 % |
| Al | 6.0 - 6.5 % |
| Cu | remainder |

3. Jewellery produced using an alloy according to either one of claims 1 and 2.

4. A spectacle frame or parts thereof, produced using an alloy according to either one of claims 1 and 2.

5. Metal items for articles of clothing, produced using an alloy according to either one of claims 1 and 2.

6. An intermediate product or starting material, in particular wire, strip or bar material, produced using an alloy according to either one of claims 1 and 2.

## Revendications

1. Alliage, en particulier pour la fabrication de montures de lunettes, d'articles de bijouterie et d'autres pièces métalliques entrant en contact avec le corps et devant être portés sur le corps, caractérisé par la composition suivante, en % en poids :
Zn 3,0 - 7,0 %
Mn 8,0 - 13,0 %
Fe 0,5 - 3,5 %
Al 4,5 - 8,0 %
Cu le reste

2. Alliage selon la revendication 1, caractérisé par la composition suivante, en % en poids :
Zn 4,5 - 5,5 %
Mn 10,0 - 11,0 %
Fe 1,8 - 2,3 %
Al 6,0 - 6,5 %
Cu le reste

3. Articles de bijouterie, fabriqués en utilisant un alliage selon l'une des revendications 1 ou 2.

4. Monture de lunettes ou éléments de cette dernière, fabriquée en utilisant un alliage selon l'une des revendications 1 ou 2.

5. Pièces métalliques pour vêtements, fabriquées en utilisant un alliage selon l'une des revendications 1 ou 2.

6. Produit intermédiaire ou matériau de départ,en particulier matériau en fil, bande ou barre, fabriqué en utilisant un alliage selon l'une des revendications 1 ou 2.
